# EUROPEAN PATENT APPLICATION

(11) **EP 4 726 637 A1**
(43) Date of publication of application: **15.04.2026**
(21) Application number: 25202915.2
(22) Date of filing: 18.09.2025
(51) Int. Cl.: G06Q 30/0601, G06N 3/0475

(54) **RETRIEVAL-AUGMENTED ITEM ATTRIBUTE GENERATION**

(30) Priority: 09.10.2024 US 202418911071
(71) Applicant: eBay Inc., San Jose, CA 95125 (US)
(72) Inventor: REN, Jie, San Jose, CA 95125 (US)
(74) Representative: Müller-Boré & Partner Patentanwälte PartG mbB

(57) **Abstract**

Retrieval-augmented item attribute generation techniques are described. An attribute generation system receives input describing a target item, such as a title of the target item, an image depicting the target item, or a combination thereof. Given the input, the attribute generation system generates a latent space embedding representation of the target item and identifies similar items based on the latent space embedding representation. The attribute generation system then identifies, for each similar item, one or more aspects that include information describing the similar item. Similar item aspects and the input describing the target item are used to generate a prompt that causes a machine learning system to generate name-value attribute pairs for the target item. The name-value attribute pairs are output for display in a user interface and selectable for inclusion in a digital marketplace listing for the target item.

## Description

### BACKGROUND

Digital marketplaces are increasingly used by entities such, as individuals, companies, and so forth, to facilitate transactions involving items listed for sale on the digital marketplaces. Accurately describing an item for sale with correct attributes is imperative for ensuring trustworthy transactions, as doing so reduces misunderstandings, returns, and complaints. Accurately describing an item further improves visibility and searchability of a listing within a digital marketplace, and is thus desirable for both buyers and sellers involved in digital marketplace transactions.

### SUMMARY

Retrieval-augmented item attribute generation techniques are described. An attribute generation system receives input describing a target item, such as a title of the target item, an image depicting the target item, or a combination thereof. Given the input, the attribute generation system generates a latent space embedding representation of the target item and identifies similar items based on the latent space embedding representation. The attribute generation system then identifies, for each similar item, one or more aspects that include information describing the similar item. Similar item aspects and the input describing the target item are used to generate a prompt that causes a machine learning system to generate name-value attribute pairs for the target item.

For instance, the attribute generation system generates a large language model (LLM) prompt by updating fields of a template that instructs the LLM to deduce name-value attribute pairs, for a target item, by using the input describing the target item as a primary reference point to be cross-referenced with the similar item aspects as identified by the attribute generation system. The prompt further instructs the LLM to prioritize plausible name-value attribute pairs for the target item in a defined order of importance and to assign values for each attribute name-value pair.

In some implementations, the prompt constrains the LLM to avoid generating attribute names or values not included in the similar item aspects and to aggregate multiple plausible values for an attribute into a set of candidate values, where one of the candidate values is either automatically selected by the attribute generation system or manually via user input. The name-value attribute pairs are output for display in a user interface and selectable for inclusion in a digital marketplace listing for the target item.

This Summary introduces a selection of concepts in a simplified form that are further described below in the Detailed Description. As such, this Summary is not intended to identify essential features of the claimed subject matter, nor is it intended to be used as an aid in determining the scope of the claimed subject matter.

### BRIEF DESCRIPTION OF THE DRAWINGS

The detailed description is described with reference to the accompanying figures. Entities represented in the figures are indicative of one or more entities and thus reference is made interchangeably to single or plural forms of the entities in the discussion.
FIG. 1 is an illustration of a digital medium environment in an example implementation that is operable to employ retrieval-augmented item attribute generation techniques described herein.
FIG. 2 depicts a system in an example implementation showing operation of an attribute generation system of FIG. 1 in greater detail as generating item attributes describing a target item based on input identifying the target item.
FIG. 3 depicts a system in an example implementation showing operation of a prompt generation module of FIG. 2 in greater detail as generating a prompt based on aspects describing one or more items identified as similar to a target item by the attribute generation system of FIG. 1.
FIG. 4 depicts a system in an example implementation showing output of a user interface of FIG. 1 as displaying item attributes generated by a machine learning system based on a prompt generated by the attribute generation system of FIG. 1.
FIG. 5 depicts a system in an example implementation showing operation of a listing generation system generating an item listing for a target item that includes item attributes generated by the attribute generation system of FIG. 1.
FIG. 6 depicts a procedure in an example implementation of the attribute generation system of FIG. 1 as generating item attributes describing a target item based on input identifying the target item.
FIG. 7 illustrates an example system including various components of an example device that can be implemented as any type of computing device as described and/or utilize with reference to the previous figures to implement the techniques described herein.

### DETAILED DESCRIPTION

### Overview

Accurately describing an item for sale with correct attributes is essential for facilitating trustworthy transactions on digital marketplaces, as doing so reduces misunderstandings, returns, and complaints. Accurately describing an item further improves visibility and searchability of a listing within a digital marketplace, and is thus desirable for both buyers and sellers involved in digital marketplace transactions.

Conventional techniques for generating an item listing, however, rely on seller knowledge and force sellers to manually enter detailed product information when defining aspects of an item being listed for sale. These conventional techniques thus often involve searching for product information that is not known or readily available to the seller, which becomes particularly time-consuming for sellers listing multiple items for sale. Further, given variations between different versions of a single product, sellers frequently do not know what aspects correctly identify the item being listed for sale, which makes the item listing process error-prone and forces the seller to conduct additional research, consequently increasing the seller's burden in listing an item and decreasing marketplace engagement.

To address these technical challenges facing conventional systems and techniques, retrieval-augmented item attribute generation techniques are described. An attribute generation system, for instance, is configured to implement an item embedding module, a similarity module, an aspect retrieval module, a prompt generation module, and an aspect generation module, which collectively generate item attributes based on input describing a target item, such as a title of the target item, an image depicting the target item, or a combination thereof.

Based on the input describing the target item, the item embedding module generates a latent space embedding representation of the target item, which the similarity module uses to identify items that are similar to the target item. A list of similar items generated by the similarity module is used by the aspect retrieval module to generate one or more aspects for each item in the list of similar items, where the aspects include information describing the respective similar item.

The input describing the target item and the similar item aspects are then used by the prompt generation module to generate a prompt. In implementations, generating the prompt involves updating fields of a template designed to cause one or more machine learning models (e.g., a large language model (LLM)) to generate an output that includes name-value pairs for attributes that accurately characterize the target item. The name-value attribute pairs generated by the one or more machine learning models are then presented for output in a user interface (e.g., at a display device of a computing system used by a seller generating an item listing).

In some implementations, the attribute generation system is supported by a service provider system that further supports a listing generation system. In such implementations, the service provider system is configured to support user interaction in selecting name-value attribute pairs for inclusion in an item listing that lists the target item for sale on one or more digital marketplaces. A user interface that displays the name-value attribute pairs generated by the attribute generation system, for instance, receives facilitates selection of one or more of the name-value pairs and displays an item listing for the target item that includes the selected attribute name-value pairs.

The item listing for the target item, with the selected attribute name-value pairs, is then published via one or more digital marketplaces. In this manner, the retrieval-augmented item attribute generation techniques described herein address technical challenges associated with conventional item listing techniques, providing increased user and computational efficiency. Further discussion of these and other examples is included in the following description and illustrated with respect to the corresponding figures.

In the following discussion, an example environment is described that is configured to employ the techniques described herein. Example procedures are also described that are configured for performance in the example environment as well as other environments. Consequently, performance of the example procedures is not limited to the example environment and the example environment is not limited to performance of the example procedures.

### Example Environment

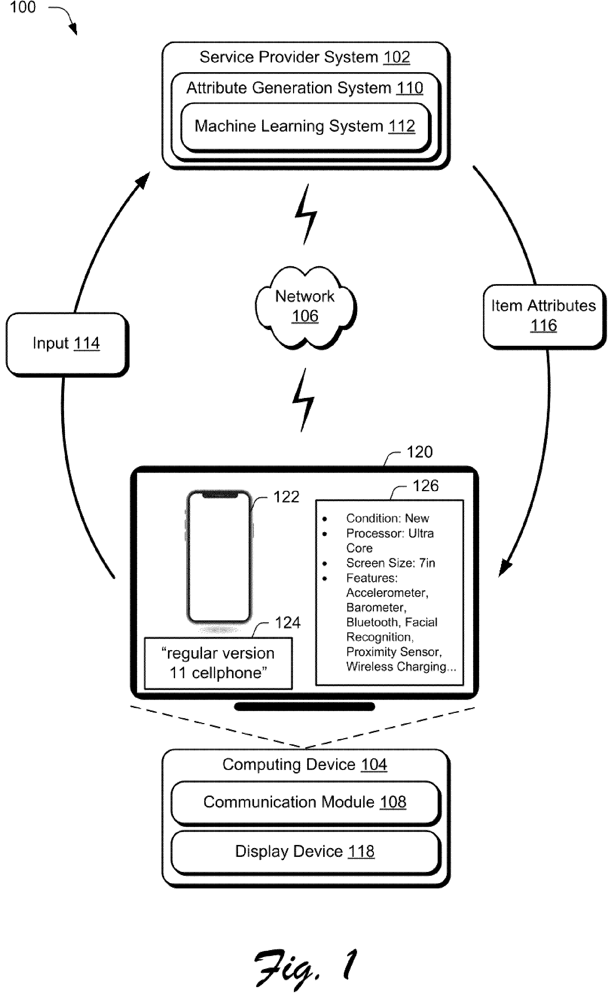

FIG. 1 is an illustration of a digital medium environment 100 in an example implementation that is operable to employ retrieval-augmented item attribute generation techniques described herein. The illustrated environment 100 includes a service provider system 102 and a computing device 104 that are communicatively coupled, one to another, via a network 106. Computing devices, such as one or more computing devices represented by the service provider system 102 and/or the computing device 104, are configurable in a variety of manners.

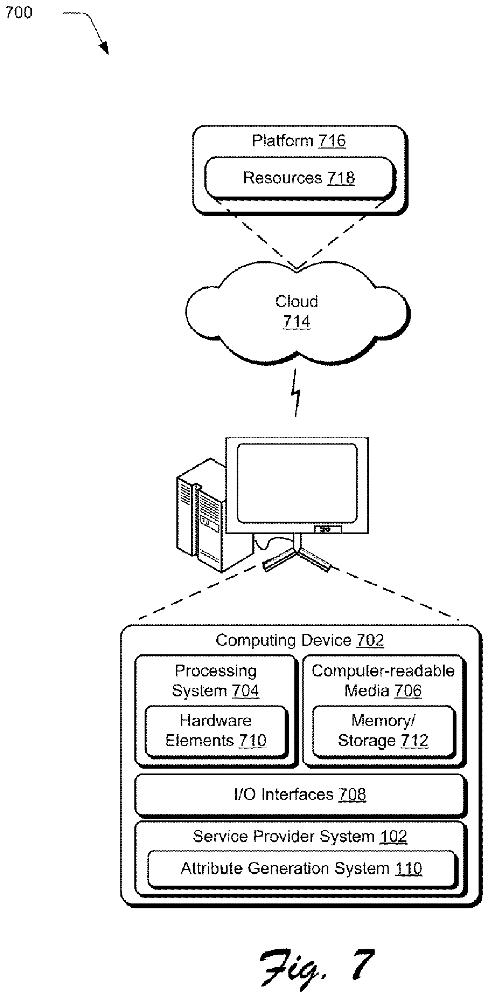

A computing device, for instance, is configurable as a desktop computer, a laptop computer, a mobile device (e.g., assuming a handheld configuration such as a tablet or mobile phone), and so forth. Thus, a computing device ranges from full resource devices with substantial memory and processor resources (e.g., personal computers, game consoles) to a low-resource device with limited memory and/or processing resources (e.g., mobile devices). Additionally, although a single computing device is shown and described in instances in the following discussion, a computing device is also representative of a plurality of different devices, such as multiple servers utilized by an entity to perform operations "over the cloud" for the service provider system 102 and as further described in relation to FIG. 7.

The service provider system 102 is representative of a combination of hardware and software resources (e.g., instructions stored on a computer-readable storage medium that are executed by at least one processing device) to provide digital services (e.g., digital services that are remotely available to the computing device 104 via the network 106). As an example, a digital service offered by the service provider system 102 includes a digital marketplace platform, such as a cloud-based, modular architecture that enables secure and scalable transactions between buyers and sellers of products or services listed for sale via digital marketplace listings.

In implementations, such digital services offered by the service provider system 102 are built on microservices that handle various digital marketplace functions such as user authentication, item listing management, payment processing, order fulfillment, and so forth. In some implementations, digital services offered by the service provider system 102 are extendable to third-party integrations, such that functionality of the service provider system 102 is integrated or otherwise extended to other digital services. As described in further detail below with respect to FIG. 7, the service provider system 102 is representative of a distributed data storage system, which is configured to ensure fault tolerance and implements encryption protocols to protect sensitive user data, transaction data, and so forth.

In the specific example context of a digital marketplace service provided by the service provider system 102, the service provider system 102 incorporates search and recommendation algorithms to personalize an experience of a user interfacing with the digital marketplace of the service provider system 102. Continuing this example context of a digital marketplace service, the service provider system 102 implements an access control system to ensure that certain resources are restricted to authorized entities, provide analytics to marketplace activity, and so forth.

In the illustrated example of FIG. 1, computing device 104 includes a communication module 108 to access digital services (e.g., via the network 106) offered by the service provider system 102. The communication module 108, for instance, is representative of a browser configured to access a digital marketplace of the service provider system 102 via the Internet, an application provided by the service provider system 102, combinations thereof, and so forth. The communication module 108 is thus representative of functionality of the computing device 104 to communicate data to, and receive data from, the service provider system 102.

The service provider system 102 is depicted as including an attribute generation system 110. Although illustrated and described herein as being implemented at the service provider system 102, in some implementations the attribute generation system 110 is implemented locally at the computing device 104. The attribute generation system 110 implements a machine learning system 112 and is configured to receive an input 114 describing a target item to be listed for sale via a digital marketplace. Based on the input 114, the attribute generation system 110 leverages the machine learning system 112 to generate an output that includes item attributes 116 for the target item (e.g., the attribute generation system 110 leverages one or more generative artificial intelligence models trained to output item attributes for a target item). The item attributes 116 are representative of name-value attribute pairs that describe characteristics of the target item, where the described characteristics of the target item are not included in the input 114 that describes the target item.

The computing device 104 is further configured as including a display device 118. The display device 118 is representative of hardware configured to output visual information to one or more users of the computing device 104. For instance, the display device 118 is representative of a monitor (e.g., an external screen connected to and optionally integrated into a form factor of the computing device 104). Alternatively or additionally, the display device 118 is representative of a touchscreen that functions both to output visual information and receive input from a user of the computing device 104. Alternatively or additionally, the display device 118 is representative of a projector configured to display visual information on relatively large surfaces. Alternatively or additionally, the display device 118 is representative of a wearable device (e.g., a virtual reality headset) that immerses a user of the computing device 104 in a digital environment. Other examples are contemplated in accordance with the described techniques, such that the display device 118 is representative of a range of different display sizes, resolutions, and configurations for outputting visual information on behalf of the computing device 104.

The display device 118, for instance, outputs a display of a user interface 120 for the service provider system 102. In the illustrated example of FIG. 1, the user interface 120 is depicted as displaying visual information describing the input 114 provided to the service provider system 102, as well as the item attributes 116 generated from the input 114. For instance, the user interface 120 includes a target item image 122 as well as a target item title 124. In the illustrated example of FIG. 1, the target item for which an item listing is to be generated is a phone, with the target item image 122 depicting the phone and the target item title 124 providing a textual description of the phone. In contrast to the specific information included in an item listing for the target item, the target item title 124 describes the phone at a high level of generality (e.g., a "regular version 11 cellphone"). In implementations, the input 114 is provided by a user of the computing device 104, such as by a seller seeking to list the target item for sale via a digital marketplace provided by the service provider system 102.

For instance, the target item image 122 represents a picture of the phone taken by a user of the computing device 104 (e.g., using an image capture device such as a camera integrated into the computing device 104) and the target item title 124 represents a textual description of the phone as provided by the user of the computing device 104. In implementations, the input 114 includes one or more of the target item image 122 or the target item title 124 (e.g., the input 114 includes only an image of the phone, only a general textual description of the phone, or both). In this manner, the input 114 is representative of information that describes a target item at a high level of generality, lacking one or more specific aspects that distinguish the target item from other items (e.g., aspects that differentiate the specific phone depicted in target item image 122 from other phones).

As described in further detail below, the attribute generation system 110 leverages the machine learning system 112 to generate item attributes 116 based on the input 114. The item attributes 116 are communicated from the service provider system 102 to the computing device 104 (e.g., for display in the user interface 120). As depicted in the illustrated example of FIG. 1, item attributes 116 generated by the attribute generation system 110 are returned as name-value attribute pairs 126. In the context of a "name-value attribute pair," the term "name" refers to a label or identifier that specifies a particular attribute of an item, such as "color" or "condition." The "name" of a name-value attribute pair thus defines what characteristic of the target item is being described. The term "value" is representative of specific information corresponding to the named attribute, such as "blue" for color or "Used" for condition. Together, the name and value work as a pair, with the name indicating the attribute and the value quantifying and/or qualifying data associated with the indicated attribute, thus providing a structured form for describing various properties of an item.

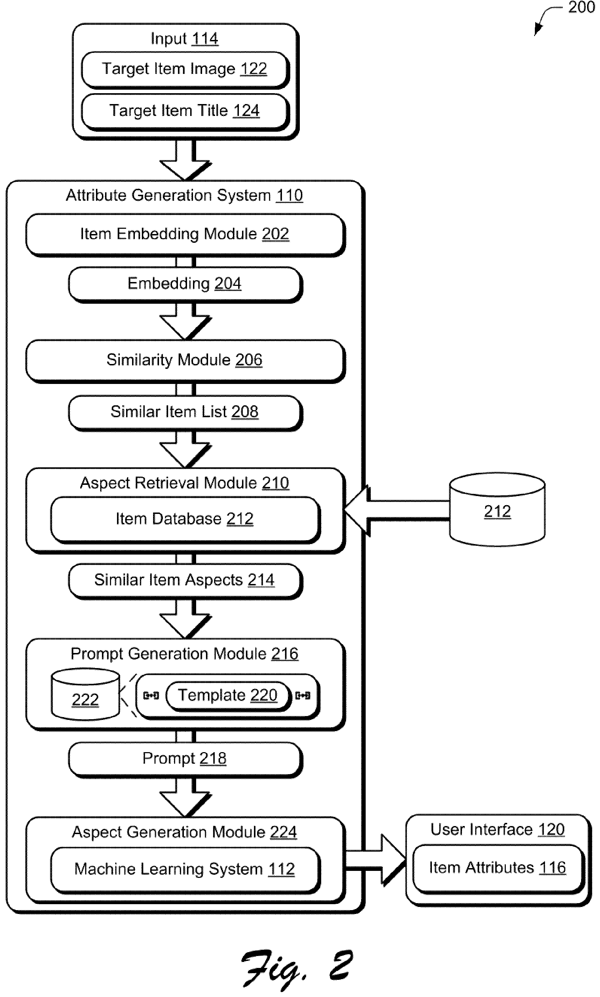

As a specific example, FIG. 1 depicts a scenario where the item attributes 116 for the phone represented by input 114 include the following name-value attribute pairs 126: "Condition: New"; "Processor: Ultra Core"; "Screen Size: 7 in."; "Feature: Accelerometer"; "Feature: Barometer"; "Feature: Bluetooth"; "Feature: Facial Recognition"; "Feature: Proximity Sensor"; and "Feature: Wireless Charging." The item attributes 116 thus represent information describing the target item in additional detail beyond the general description of the target item as represented by the input 114. In implementations, individual ones of the item attributes 116 are selectable (e.g., via user input at the computing device 104) for inclusion in a listing that offers the target item (e.g., the phone depicted by target item image 122) for sale via a digital marketplace of the service provider system 102. In contrast to conventional item listing techniques, which require a seller to manually curate and enter item attributes for inclusion in an item listing, the attribute generation system 110 automatically generates item attributes 116 that accurately describe a target item in specific detail. For a further description of the attribute generation system 110 generating the item attributes 116, consider FIG. 2.

In general, functionality, features, and concepts described in relation to the examples above and below are employed in the context of the example procedures described in this section. Further, functionality, features, and concepts described in relation to different figures and examples in this document are interchangeable among one another and are not limited to implementation in the context of a particular figure or procedure. Moreover, blocks associated with different representative procedures and corresponding figures herein are applicable together and/or combinable in different ways. Thus, individual functionality, features, and concepts described in relation to different example environments, devices, components, figures, and procedures herein are usable in any suitable combinations and are not limited to the particular combinations represented by the enumerated examples in this description.

### Example Retrieval-Augmented Item Attribute Generation

FIG. 2 depicts a system 200 in an example implementation showing operation of an attribute generation system 110 in greater detail as generating item attributes 116 describing a target item based on input 114 identifying the target item. In the illustrated example of FIG. 2, the attribute generation system 110 is depicted as including an item embedding module 202. The item embedding module 202 represents functionality of the attribute generation system 110 to generate an embedding 204 for the target item described by the input 114. The embedding 204 is representative of a latent space embedding representation of the target item.

For instance, in one or more implementations the item embedding module 202 is representative of a service built using the Representational State Transfer (REST) architectural style. The item embedding module 202 is thus representative of a RESTful service supported by the attribute generation system 110 that leverages one or more deep learning models to generate embedding 204 based on the input 114, where the embedding 204 is output as a dense vector representation of the target item described by the target item image 122, the target item title 124, or a combination thereof.

Given the input 114, the item embedding module 202 processes the target item image 122, the target item title 124, or a combination thereof through a deep learning model configured utilizing architectures such as transformers (for text), convolutional neural networks (for images), or combinations thereof. In this manner, the embedding 204 represents a fixed-dimensional array of floats that capture semantic properties of the target item as described by the input 114.

In implementations, the item embedding module 202 is trained using a database that pairs items to their known titles and/or images, such that each item in the database is associated with a ground truth identifying label. This labeled data is utilized (e.g., by the attribute generation system 110) to train a multi-modal model that includes a text encoder and an image encoder, such that the item embedding module 202 is configured to handle both the target item image 122 and the target item title 124. The text encoder, for instance, represents functionality of the item embedding module 202 to transform the target item title 124 into an embedding (e.g., using a Bidirectional Encoder Representations from Transformers (BERT) architecture). The image encoder represents functionality of the item embedding module 202 to transform the target item image 122 into an embedding (e.g., using concurrent neural network architectures such as ResNet or EfficientNet).

The text and image embeddings generated by the item embedding module 202 are projected into a common latent space. In implementations, during training of one or more machine learning models implemented by the item embedding module 202, a contrastive loss (e.g., triplet loss) is employed to ensure that items with similar titles and images have embeddings that are close in the latent space (e.g., vector space), while dissimilar items are mapped further apart from one another. Image and text encoders of the item embedding module 202 are updated via backpropagation using a labeled dataset that ensures the embeddings maintain semantic relevance. In implementations, the attribute generation system 110 further refines the item embedding module 202 using augmentations such as data shuffling, dropout, and regularization, thereby improving the embedding 204 output by the item embedding module 202.

The attribute generation system 110 is further depicted as including a similarity module 206. The similarity module 206 represents functionality of the attribute generation system 110 to generate a similar item list 208 based on the embedding 204, where the similar item list 208 includes a plurality of items that are similar to the target item identified by the input 114. In implementation, the similarity module 206 is configured as a RESTful service that maintains an Approximate Nearest Neighbor (ANN) index. The ANN index maintained by the similarity module 206 is designed to efficiently retrieve similar items based on their respective embeddings (e.g., to retrieve items having similar embeddings to the embedding 204). Functionality of the similarity module 206 involves inputting the embedding 204 to a REST endpoint and querying the ANN index to identify nearest items (e.g., identify similar items based on cosine similarity).

In implementations, the similarity module 206 leverages one or more ANN algorithms to generate the similar item list 208, such as Hierarchical Navigable Small World (HNSW) or Locality-Sensitive Hashing (LSH) algorithms. By leveraging the one or more ANN algorithms using the ANN index, the similarity module 206 efficiently identifies items that are similar to the target item identified by the input 114. Advantageously, the similarity module 206 generates the similar item list 208 with sub-linear time complexity relative to conventional search approaches, such as brute-force approaches, making functionality of the similarity module 206 scalable for large ANN indices.

In implementations, to generate the similar item list 208, the similarity module 206 normalizes the vector representation of the embedding 204 to ensure consistent cosine similarity calculations. Cosine similarity, which measures the angle between two vectors in the embedding space, is used to quantify the similarity between the embedding 204 and the respective embeddings for items included in the similar item list 208. For instance, cosine distance (1 - cosine similarity) is used, and the goal of the similarity search performed by the similarity module 206 is to minimize this distance.

Results of a similarity search performed by the similarity module 206 are returned as a list of item identifiers, which represent the nearest neighbors to the embedding 204. In some implementations, the attribute generation system 110 tasks the similarity module 206 with ordering item identifiers in ascending order of cosine distance, meaning that the first item in the list has the smallest distance (i.e., the highest similarity), and each subsequent item has a progressively larger distance from the embedding 204. In implementations, the similar item list 208 is output in a JavaScript Object Notation (JSON) format, containing an array of the top-k nearest item identifiers, along with their corresponding cosine distances if required for additional insight into the similarity ranking.

In implementations, the attribute generation system 110 is configured to update the ANN index used by the similarity module 206 to generate the similar item list 208, such as to incorporate new embeddings as items are added or removed from the service provider system 102, ensuring the results reflect the most up-to-date representation of the dataset.

The attribute generation system 110 further includes an aspect retrieval module 210. The aspect retrieval module 210 represents functionality of the attribute generation system 110 to compare each item identifier included in the similar item list 208 to entries in an item database 212. Entries in the item database 212 represent a grouping of a known item identifier for an item and corresponding metadata that describes the item (e.g., title, category identifier, item attributes, price, and so forth).

In some implementations, the item database 212 represents a local database accessible by the attribute generation system 110 (e.g., an item database 212 of the service provider system 102). Alternatively or additionally, the item database 212 is a database associated with one or more different service providers that is accessed by the attribute generation system 110 (e.g., via the network 106). For each item in the similar item list 208, the aspect retrieval module 210 is configured to output similar item aspects 214, where the aspects include information describing the respective similar item as obtained from the item database 212.

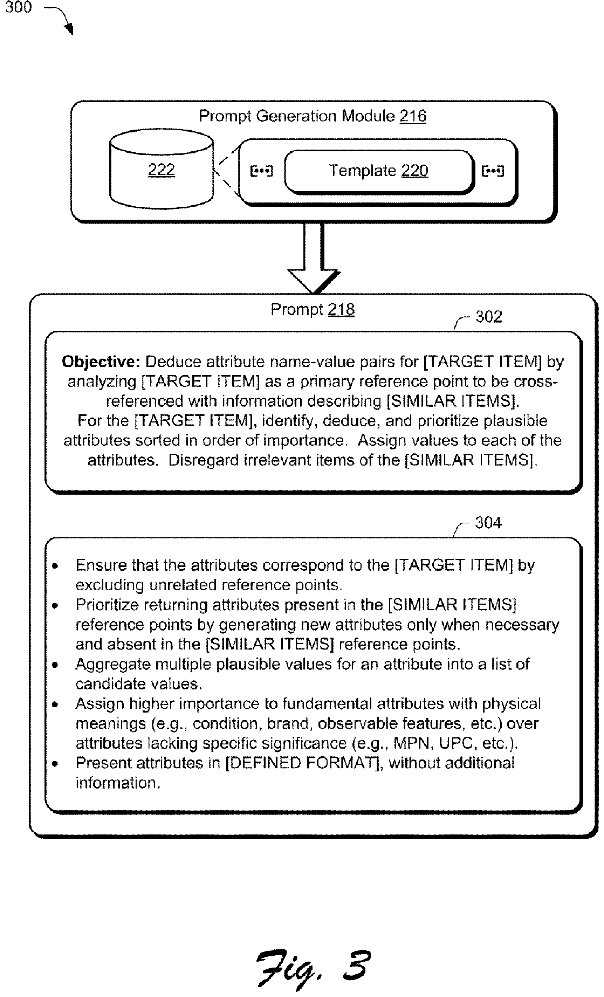

The similar item aspects 214 and the input 114 is then provided as input to a prompt generation module 216 to generate a prompt 218. The prompt 218 is configured to initiate generation of the item attributes 116 based on the input 114 and the similar item aspects 214 using one or more machine learning models of the machine learning system 112. The prompt generation module 216 is configured to do so by using one or more templates 220 (illustrated as stored in a storage device 222) that are "filled in" by the prompt generation module 216 (e.g., using natural language processing). A specific example of the prompt generation module 216 generating the prompt 218 by filling in one or more templates 220 is described in further detail below with respect to FIG. 3.

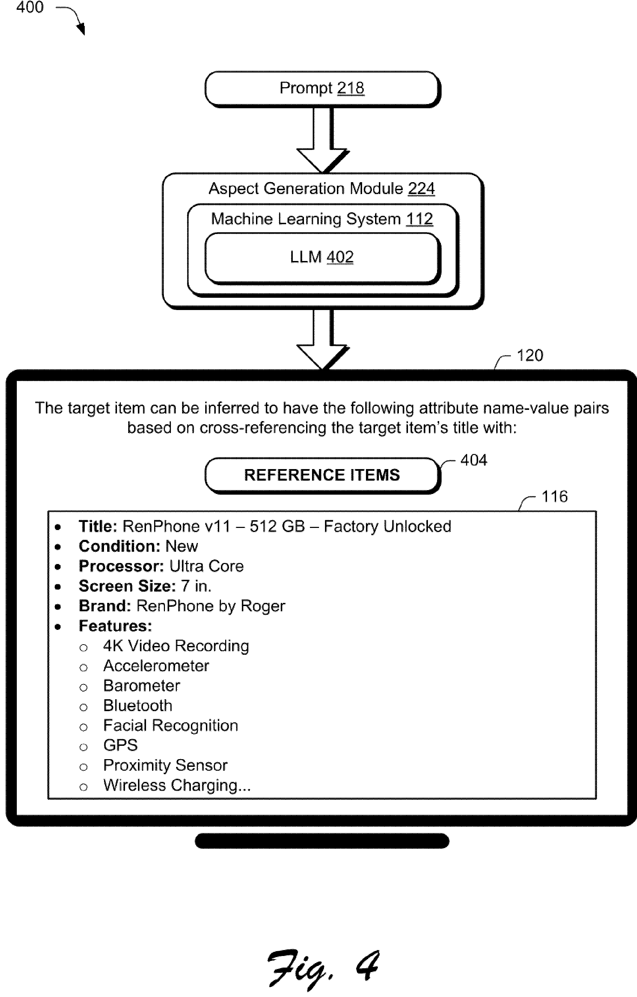

The prompt 218 is then provided as input to an aspect generation module 224, which represents functionality of the attribute generation system 110 to output the item attributes 116 (e.g., for display in the user interface 120) using one or more trained machine learning models of the machine learning system 112 (e.g., at least one LLM as described in further detail below with respect to FIG. 4).

FIG. 3 depicts a system 300 in an example implementation showing operation of the prompt generation module 216 in greater detail as generating prompt 218 based on similar item aspects 214 generated by the attribute generation system 110. In the illustrated example of FIG. 3, prompt 218 is generated based on two one or more templates 220: template 302 and template 304. In the illustrated example, text of the prompt 218 differentiates text of a template 220 from text of the input 114 or text of the similar item aspects 214 using brackets. For instance, the prompt generation module 216 generates prompt 218 by inserting text of the input 114 and text of the similar item aspects 214 at positions of the prompt 218 enclosed by brackets.

The prompt 218, for instance, is depicted as defining the following objective for aspect generation module 224: Deduce attribute name-value pairs for [TARGET ITEM] by analyzing [TARGET ITEM] as a primary reference point to be cross-referenced with information describing [SIMILAR ITEMS]. In this prompt 218, the [TARGET ITEM] is obtained from at least one of the target item image 122 or the target item title 124 represented by the input 114. In some implementations, the [TARGET ITEM] is different than the input 114 (e.g., these portions of the prompt 218 are replaced with a more accurate description as identified by the attribute generation system 110 using the embedding 204).

The prompt 218 is further generated to define the objective for the aspect generation module 224 by instructing the aspect generation module 224 to identify, deduce, and prioritize, for the [TARGET ITEM] plausible attributes sorted in an order of importance by assigning values to each of the attributes. The prompt 218 further ensures that only relevant similar item aspects 214 are included in the item attributes 116 by instructing the aspect generation module 224 to disregard irrelevant items of the [SIMILAR ITEMS] (e.g., irrelevant items that may have been inadvertently included in the similar item list 208).

The prompt 218 is further refined using template 304, such that the aspect generation module 224 is instructed to ensure that attributes correspond to the [TARGET ITEM] by excluding unrelated reference points, reiterating the importance of disregarding similar item aspects 214 for items that are dissimilar to the target item identified by the input 114. The prompt 218 additionally instructs the aspect generation module 224 to prioritize returning attributes present in the [SIMILAR ITEMS] reference points by generating new attributes only when necessary and when the new attributes are not present in the [SIMILAR ITEMS] reference points. The prompt 218 causes the aspect generation module 224 to aggregate multiple plausible values for an attribute into a list of candidate values. In implementations, this causes the aspect generation module 224 to output multiple possible values for a name-value attribute pair (e.g., for display in the user interface 120), with a prompt for feedback (e.g., user input to the user interface 120) to select an appropriate one of the possible values to be included as characterizing the attribute name in the item attributes 116.

The prompt 218 additionally causes the aspect generation module 224 to assign higher importance (e.g., a mathematically greater weight) to fundamental item attributes that have physical meanings, such as condition brand, human-observable features, and so forth. These higher importance attributes are favored by the prompt 218 relative to attributes lacking specific significance (e.g., as perceived by a human considering purchase of an item, such as manufacturer part number (MPN), universal product code (UPC), and the like. Additionally, the prompt 218 instructs the aspect generation module 224 to present the item attributes 116 in a [DEFINED FORMAT], without additional information. In implementations, the [DEFINED FORMAT] of the item attributes 116 (e.g., JSON) is designated by the attribute generation system 110, designated by a user of the computing device 104, or combinations thereof.

FIG. 4 depicts a system 400 in an example implementation showing output of a user interface 120 as displaying item attributes 116 generated by the machine learning system 112 based on a prompt generated by the attribute generation system 110. In the illustrated example of FIG. 4, the aspect generation module 224 is depicted as using a LLM 402 of the machine learning system 112 to generate the item attributes 116 based on the input prompt 218. The LLM 402 is representative of at least one LLM built upon a transformer architecture, such that the LLM 402 is designed to handle sequential data and natural language processing tasks.

In some implementations, LLM 402 includes multiple layers of self-attention mechanisms, where each layer contains two main components: a multi-head self-attention mechanism and a feed-forward neural network. The self-attention mechanism enables the LLM 402 to focus on different parts of an input sequence (e.g., prompt 218) simultaneously, capturing dependencies between words or tokens regardless of their position in the sequence. This LLM architecture is scaled to numerous (e.g., billions or even trillions) of parameters, with layers stacked deeply (e.g., hundreds of layers) to capture complex patterns and representations.

In implementations, a LLM implemented by the aspect generation module 224 is pre-trained on vast amounts of text data, where the LLM learns to predict missing or next tokens based on context, leading to the emergence of a rich latent space representation of language. After pre-training, fine-tuning on specific tasks or domain-specific data is utilized to enhance performance for particular applications (e.g., outputting item attributes 116 based on the prompt 218). In implementations, parameters of the LLM 402 are optimized using variants of stochastic gradient descent (e.g., Adam), making the LLM 402 capable of handling a wide range of natural language understanding and generation tasks.

An output generated by the LLM 402, as displayed in the user interface 120, indicates that the target item described by input 114 can be inferred to have attribute name-value pairs included in the item attributes 116. In some implementations, an output of the LLM 402 further includes information describing that the item attributes 116 are generated based on cross-referencing the input 114 (e.g., the target item image 122, the target item title 124, or a combination thereof) with a plurality of reference items.

In some implementations, the LLM 402 is configured to output information describing the plurality of reference items from which the item attributes 116 are derived and/or generated. For instance, in the illustrated example of FIG. 4, the user interface 120 includes control 404, which is selectable (e.g., via user input) to cause display of additional information regarding one or more specific reference items that were used to generate the item attributes 116. As a specific example, in response to detecting input selecting control 404, the attribute generation system 110 outputs a display of information (e.g., via the user interface 120) that describes one or more items included in the similar item list 208, one or more of the similar item aspects 214 for at least one similar item, or combinations thereof. In this manner, the attribute generation system 110 is configured to provide a user (e.g., of the computing device 104) with information that describes a basis for how the item attributes 116 were output by the LLM 402. Advantageously, this explanation of a basis for generating the item attributes 116 enhances transparency and trust with the attribute generation system 110, allowing a user of the computing device 104 to better understand reasoning and data sources supporting generation of the item attributes 116. This output as generated by the machine learning system 112 of the aspect generation module 224 further empowers users to assess accuracy and relevance of the item attributes 116, leading to a more informed decision-making process in listing a target item for sale.

The user interface 120 depicted in the example of FIG. 4 further includes example item attributes 116 generated for the target item identified by input 114. Continuing the illustrative example of FIG. 1, the item attributes 116 depicted in FIG. 4 represent a curated and prioritized list of attributes that specifically describe the phone depicted in target item image 122 and textually described by target item title 124.

Specifically, the item attributes 116 depicted in FIG. 4 specify that a title for the target item to be included in a listing for sale is "RenPhone v11 - 512 GB - Factory Unlocked." The item attributes 116 further describe that a condition of the target item is "New," that the target item has an "Ultra Core" processor, a screen size of "7 in.," and is associated with the brand "RenPhone by Roger." As instructed by the prompt 218 of FIG. 3, the LLM 402 prioritizes an ordering of these item attributes 116 to favor attributes that more readily differentiate or distinguish the target item from other items (e.g., other items listed for sale via a digital marketplace).

The item attributes 116 depicted in FIG. 4 further include various features of the target item, specifically describing that the phone supports 4K video recording, includes an accelerometer, includes a barometer, supports Bluetooth connectivity, includes hardware and software for performing facial recognition, includes GPS capabilities, includes a proximity sensor, is configured for wireless charging, and so forth. Thus, the item attributes 116 generated by the attribute generation system 110 represent information that is different from, and much more specific than, the highly generalized information included in input 114 describing the target item. The item attributes 116 automatically generated by the attribute generation system 110 enable generation of a listing for sale of the target item in a manner that avoids the cumbersome and error-prone manual steps required by conventional systems.

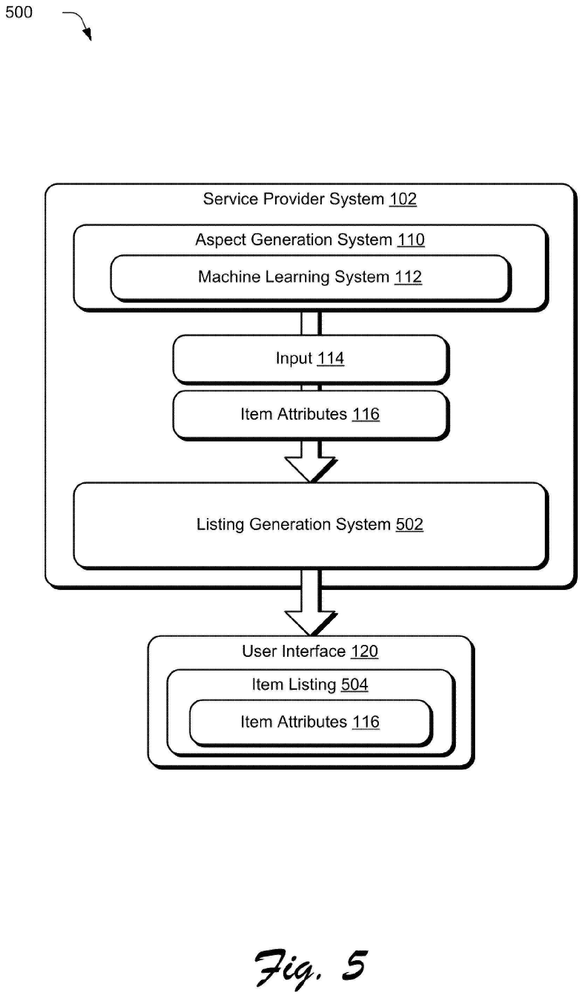

FIG. 5 depicts a system 500 in an example implementation showing operation of a listing generation system generating an item listing for a target item that includes item attributes 116 generated by the attribute generation system 110. In the illustrated example of FIG. 5, the service provider system 102 is depicted as including a listing generation system 502. The listing generation system 502 represents functionality of the service provider system 102 to generate and publish one or more listings for sale (e.g., of goods and/or services) via one or more digital marketplaces.

For instance, the listing generation system 502 represents a service provided by the service provider system 102 that automates one or more steps involved in generating an item listing 504, such as in order to ensure uniformity in presentation of various item listings at a digital marketplace. The listing generation system 502 is configured to interface with backend architecture of at least one digital marketplace and utilize a structured data model to organize information describing a subject of the listing (e.g., the input 114 provided to the attribute generation system 110, the item attributes 116 generated by the machine learning system 112 of the attribute generation system 110, or a combination thereof). The listing generation system 502 is configured to process the item attributes 116 through a series of validation, formatting, and categorization modules that enforce compliance with one or more standards designated by a digital marketplace. Doing so ensures that the item listing 504 generated by the listing generation system 502 adheres to aesthetic and structural guidelines of a digital marketplace, such as to align with a marketplace's interface design requirements.

For example, the listing generation system 502 truncates text associated with one or more of the item attributes 116 to a specified character limit, resizes and optimizes images (e.g., the target item image 122) for display, and standardizes an organization or position of the item attributes 116 to predefined formats. In some implementations, the listing generation system 502 incorporates a semantic tagging and search engine optimization (SEO) module to auto-generate metadata tags and optimize the item listing 504 for search engine discoverability, both within a digital marketplace and across external search platforms.

In implementations, the listing generation system 502 is designed with at least one layer (e.g., an API layer) that enables the item listing 504 to be integrated with external inventory management or content management systems (CMS), thereby extending the utility of the item listing 504 beyond a single digital marketplace that hosts the item listing 504. Additionally, the listing generation system 502 is configured to output a display of the item listing 504 (e.g., via the user interface 120), which enables a user of the computing device 104 to modify or update information included in the item listing 504 before publication at one or more digital marketplaces.

Having considered example systems and techniques for generating item attributes for a target item using retrieval-augmented generation, consider now example procedures to illustrate aspects of the techniques described herein.

### Example Procedures

The following discussion describes techniques that are configured to be implemented utilizing the systems and devices described herein. Aspects of each of the procedures are configured for implementation in hardware, firmware, software, or a combination thereof. The procedures are shown as a set of blocks that specify operations performed by one or more devices and are not limited to the orders shown for performing the operations by the respective blocks. In portions of the following discussion, reference is made to FIGS. 1-5.

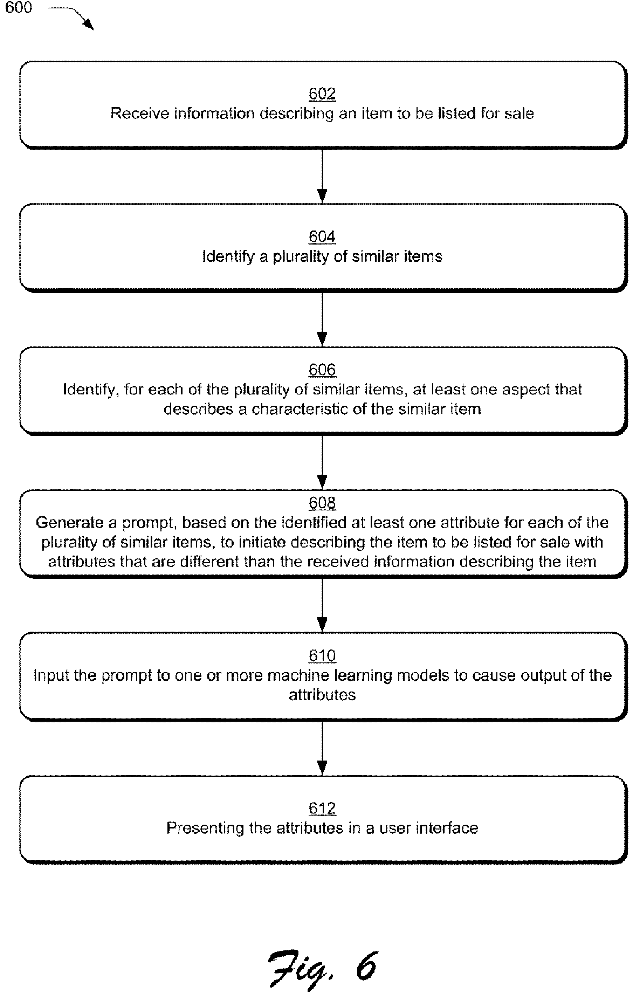

FIG. 6 depicts a procedure 600 in an example implementation of the attribute generation system 110 as generating item attributes describing a target item based on input identifying the target item.

To begin, information describing an item to be listed for sale is received (block 602). The attribute generation system 110, for instance, receives input 114 from the computing device 104 that includes at least one of the target item image 122 or the target item title 124. A plurality of similar items is then identified based on the received information (block 604). The item embedding module 202, for instance, generates embedding 204 based on the input 114. The similarity module 206 then processes the embedding 204 to generate the similar item list 208.

For each of the plurality of similar items, at least one aspect that describes a characteristic of the similar item is identified (block 606). The aspect retrieval module 210, for instance, generates similar item aspects 214 for each item included in the similar item list 208, based on information maintained in the item database 212.

A prompt is then generated, based on the identified at least one attribute for each of the plurality of similar items, to initiate describing the item to be listed for sale with attributes that are different than the received information (block 608). The prompt generation module 216, for instance, generates the prompt 218 using one or more templates 220, such as template 302 and template 304.

The prompt is input to one or more machine learning models to cause output of the attributes (block 610). The aspect generation module 224, for instance, inputs the prompt 218 to a LLM 402 of the machine learning system 112, which causes the machine learning system 112 to output the item attributes 116. The attributes are then presented in a user interface (block 612). The attribute generation system 110, for instance, communicates the item attributes 116 to computing device 104 for presentation in the user interface 120 by display device 118.

Having described example procedures in accordance with one or more implementations, consider now an example system and device to implement the various techniques described herein.

### Example System and Device

FIG. 7 illustrates an example system generally at 700 that includes an example computing device 702 that is representative of one or more computing systems and/or devices that implement the various techniques described herein. This is illustrated through inclusion of the service provider system 102 and the attribute generation system 110. The computing device 702 is configurable, for example, as a server of a service provider, a device associated with a client (e.g., a client device), an on-chip system, and/or any other suitable computing device or computing system.

The example computing device 702 as illustrated includes a processing device 704, one or more computer-readable media 706, and one or more I/O interface 708 that are communicatively coupled, one to another. Although not shown, the computing device 702 further includes a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing device 704 is representative of functionality to perform one or more operations using hardware. Accordingly, the processing device 704 is illustrated as including hardware element 710 that is configurable as processors, functional blocks, and so forth. This includes implementation in hardware as an application specific integrated circuit or other logic device formed using one or more semiconductors. The hardware elements 710 are not limited by the materials from which they are formed, or the processing mechanisms employed therein. For example, processors are configurable as semiconductor(s) and/or transistors (e.g., electronic integrated circuits (ICs)). In such a context, processor-executable instructions are electronically executable instructions.

The computer-readable storage media 706 is illustrated as including memory/storage 712 that stores instructions that are executable to cause the processing device 704 to perform operations. The computer-readable storage medium is configured for storing instructions that, responsive to execution by the processing device, causes the processing device to perform operations. The memory/storage 712 represents memory/storage capacity associated with one or more computer-readable media. The memory/storage 712 includes volatile media (such as random-access memory (RAM)) and/or nonvolatile media (such as read only memory (ROM), Flash memory, optical disks, magnetic disks, and so forth). The memory/storage 712 includes fixed media (e.g., RAM, ROM, a fixed hard drive, and so on) as well as removable media (e.g., Flash memory, a removable hard drive, an optical disc, and so forth). The computer-readable media 706 is configurable in a variety of other ways as further described below.

Input/output interface(s) 708 are representative of functionality to allow a user to enter commands and information to computing device 702, and also allow information to be presented to the user and/or other components or devices using various input/output devices. Examples of input devices include a keyboard, a cursor control device (e.g., a mouse), a microphone, a scanner, touch functionality (e.g., capacitive or other sensors that are configured to detect physical touch), a camera (e.g., employing visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 702 is configurable in a variety of ways as further described below to support user interaction.

Various techniques are described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques are configurable on a variety of commercial computing platforms having a variety of processors.

An implementation of the described modules and techniques is stored on or transmitted across some form of computer-readable media. The computer-readable media includes a variety of media that is accessed by the computing device 702. By way of example, and not limitation, computer-readable media includes "computer-readable storage media" and "computer-readable signal media."

"Computer-readable storage media" refers to media and/or devices that enable persistent and/or non-transitory storage of information (e.g., instructions are stored thereon that are executable by a processing device) in contrast to mere signal transmission, carrier waves, or signals per se. Thus, computer-readable storage media refers to non-signal bearing media. The computer-readable storage media includes hardware such as volatile and non-volatile, removable and non-removable media and/or storage devices implemented in a method or technology suitable for storage of information such as computer readable instructions, data structures, program modules, logic elements/circuits, or other data. Examples of computer-readable storage media include but are not limited to RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and are accessible by a computer.

"Computer-readable signal media" refers to a signal-bearing medium that is configured to transmit instructions to the hardware of the computing device 702, such as via a network. Signal media typically embodies computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 710 and computer-readable media 706 are representative of modules, programmable device logic and/or fixed device logic implemented in a hardware form that are employed in some embodiments to implement at least some aspects of the techniques described herein, such as to perform one or more instructions. Hardware includes components of an integrated circuit or on-chip system, an application-specific integrated circuit (ASIC), a field-programmable gate array (FPGA), a complex programmable logic device (CPLD), and other implementations in silicon or other hardware. In this context, hardware operates as a processing device that performs program tasks defined by instructions and/or logic embodied by the hardware as well as a hardware utilized to store instructions for execution, e.g., the computer-readable storage media described previously.

Combinations of the foregoing are also employed to implement various techniques described herein. Accordingly, software, hardware, or executable modules are implemented as one or more instructions and/or logic embodied on some form of computer-readable storage media and/or by one or more hardware elements 710. The computing device 702 is configured to implement particular instructions and/or functions corresponding to the software and/or hardware modules. Accordingly, implementation of a module that is executable by the computing device 702 as software is achieved at least partially in hardware, e.g., through use of computer-readable storage media and/or hardware elements 710 of the processing device 704. The instructions and/or functions are executable/operable by one or more articles of manufacture (for example, one or more computing devices 702 and/or processing devices 704) to implement techniques, modules, and examples described herein.

The techniques described herein are supported by various configurations of the computing device 702 and are not limited to the specific examples of the techniques described herein. This functionality is also implementable all or in part through use of a distributed system, such as over a "cloud" 714 via a platform 716 as described below.

The cloud 714 includes and/or is representative of a platform 716 for resources 718. The platform 716 abstracts underlying functionality of hardware (e.g., servers) and software resources of the cloud 714. The resources 718 include applications and/or data that can be utilized while computer processing is executed on servers that are remote from the computing device 702. Resources 718 can also include services provided over the Internet and/or through a subscriber network, such as a cellular or Wi-Fi network.

The platform 716 abstracts resources and functions to connect the computing device 702 with other computing devices. The platform 716 also serves to abstract scaling of resources to provide a corresponding level of scale to encountered demand for the resources 718 that are implemented via the platform 716. Accordingly, in an interconnected device embodiment, implementation of functionality described herein is distributable throughout the system 700. For example, the functionality is implementable in part on the computing device 702 as well as via the platform 716 that abstracts the functionality of the cloud 714.

In implementations, the platform 716 employs a "machine-learning model" that is configured to implement the techniques described herein. A machine-learning model refers to a computer representation that can be tuned (e.g., trained and retrained) based on inputs to approximate unknown functions. In particular, the term machine-learning model can include a model that utilizes algorithms to learn from, and make predictions on, known data by analyzing training data to learn and relearn to generate outputs that reflect patterns and attributes of the training data. Examples of machine-learning models include neural networks, convolutional neural networks (CNNs), long short-term memory (LSTM) neural networks, decision trees, and so forth.

Although the invention has been described in language specific to structural features and/or methodological acts, it is to be understood that the invention defined in the appended claims is not necessarily limited to the specific features or acts described. Rather, the specific features and acts are disclosed as example forms of implementing the claimed invention.

## Claims

1. A method comprising:
receiving information via input to a user interface, the received information describing an item to be listed for sale;
identifying for each of a plurality of similar items, at least one aspect that describes a characteristic of the similar item;
generating, based on the identified at least one aspect for each of the plurality of similar items, a prompt to initiate describing the item to be listed for sale with attributes different from the received information, using one or more machine-learning models; and
presenting the attributes described by the one or more machine-learning models for output via the user interface.

2. The method of claim 1, wherein the information describing the item to be listed for sale comprises at least one of an item title or an image of the item to be listed for sale.

3. The method of claim 1 or 2, further comprising:
generating a latent space embedding for the item to be listed for sale using the received information; and
identifying the plurality of similar items using the latent space embedding.

4. The method of any one of the preceding claims, wherein identifying, for each of the plurality of similar items, the at least one aspect that describes the characteristic of the similar item comprises comparing each of the plurality of similar items to an item database that stores metadata that describes item listings on one or more virtual marketplaces.

5. The method of any one of the preceding claims, further comprising generating an item listing for the item to be listed for sale that includes at least some of the attributes described by the one or more machine-learning models;
wherein, optionally, at least one of the attributes described by the one or more machine-learning models includes a plurality of candidate values, the method further comprising prompting input via the user interface for feedback selecting an appropriate one of the plurality of candidate values for the at least one of the attributes to be included in the item listing.

6. The method of any one of the preceding claims, wherein the prompt is configured using only text describing the received information and the identified at least one aspect for each of the plurality of similar items.

7. The method of any one of the preceding claims, wherein generating the prompt is performed by filling out a template using the identified at least one aspect for each of the plurality of similar items;
and/or
wherein the prompt tasks the one or more machine-learning models to prioritize the attributes describing the item in an order of importance.

8. The method of any one of the preceding claims, wherein the prompt tasks the one or more machine-learning models with assigning a name or a value to each of the attributes describing the item to be listed for sale.

9. The method of any one of the preceding claims, wherein the prompt causes the one or more machine-learning models to describe the item to be listed for sale using at least one attribute that is not included in the identified at least one aspect for each of the plurality of similar items.

10. A system comprising:
one or more processors; and
a computer-readable storage medium storing instructions that are executable by the one or more processors to perform operations comprising:
receiving information describing an item to be listed for sale;
identifying for each of a plurality of similar items, at least one aspect that describes a characteristic of the similar item;
generating, based on the identified at least one aspect for each of the plurality of similar items, a prompt to initiate describing the item to be listed for sale with attributes different from the received information, using one or more machine-learning models; and
presenting the attributes described by the one or more machine-learning models for output via a user interface.

11. The system of claim 10, wherein the prompt is configured using only text describing the received information and the identified at least one aspect for each of the plurality of similar items;
and/or
wherein generating the prompt is performed by filling out a template using the identified at least one aspect for each of the plurality of similar items.

12. The system of claim 10 or 11, wherein the prompt tasks the one or more machine-learning models to prioritize the attributes describing the item in an order of importance;
and/or
wherein the prompt tasks the one or more machine-learning models with assigning a name or a value to each of the attributes describing the item to be listed for sale.

13. The system of any one of claims 10 to 12, wherein the prompt causes the one or more machine-learning models to describe the item to be listed for sale using at least one attribute that is not included in the identified at least one aspect for each of the plurality of similar items.

14. The system of any one of claims 10 to 13, the operations further comprising generating an item listing for the item to be listed for sale that includes at least some of the attributes described by the one or more machine-learning models;
wherein, optionally, at least one of the attributes described by the one or more machine-learning models includes a plurality of candidate values, the operations further comprising prompting input via the user interface for feedback selecting an appropriate one of the plurality of candidate values for the at least one of the attributes to be included in the item listing.

15. A computer-readable storage medium storing instructions that are executable by at least one processor to perform operations comprising:
receiving information describing an item to be listed for sale;
identifying for each of a plurality of similar items, at least one aspect that describes a characteristic of the similar item;
generating, based on the identified at least one aspect for each of the plurality of similar items, a prompt to initiate describing the item to be listed for sale with attributes different from the received information, using one or more machine-learning models;
generating an item listing for the item to be listed for sale that includes at least some of the attributes described by the one or more machine-learning models; and
presenting the item listing including the at least some of the attributes described by the one or more machine-learning models in a user interface.
